(19) Europäisches Patentamt
European Patent Office
Office européen des brevets

(11) **EP 2 377 893 B1**

(12) **EUROPEAN PATENT SPECIFICATION**

(45) Date of publication and mention
of the grant of the patent:
**06.11.2013 Bulletin 2013/45**

(51) Int Cl.:
***C08F 2/24*** *(2006.01)*    ***B41J 2/01*** *(2006.01)*
***B41M 5/00*** *(2006.01)*    ***C09D 11/00*** *(2006.01)*
***C08F 220/26*** *(2006.01)*

(21) Application number: **09837459.8**

(22) Date of filing: **25.12.2009**

(86) International application number:
**PCT/JP2009/007235**

(87) International publication number:
**WO 2010/079569 (15.07.2010 Gazette 2010/28)**

(54) **POLYMER EMULSION AND AQUEOUS INKJET RECORDING LIQUID CONTAINING SAID POLYMER EMULSION**

POLYMEREMULSION UND WÄSSRIGE TINTENSTRAHLAUFZEICHNUNGSFLÜSSIGKEIT MIT DIESER POLYMEREMULSION

ÉMULSION DE POLYMÈRE ET LIQUIDE D'IMPRESSION À JET D'ENCRE AQUEUX COMPRENANT LADITE ÉMULSION DE POLYMÈRE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.01.2009   JP 2009003026**

(43) Date of publication of application:
**19.10.2011   Bulletin 2011/42**

(73) Proprietor: **Toyo Ink SC Holdings Co., Ltd.**
**Tokyo 104-8377 (JP)**

(72) Inventors:
• **OSHIMA, Yoshiteru**
**Tokyo 104-8379 (JP)**
• **KITAMOTO, Tsuyoshi**
**Tokyo 104-8379 (JP)**
• **WASHIO, Satoshi**
**Tokyo 104-8378 (JP)**

(74) Representative: **Regimbeau**
**20, rue de Chazelles**
**75847 Paris Cedex 17 (FR)**

(56) References cited:
**JP-A- 1 174 506     JP-A- 2009 091 487**

EP 2 377 893 B1

## Description

### Technical Field

The present invention relates to a polymer emulsion and a pigment-type aqueous inkjet recording liquid containing said polymer emulsion, and a method of manufacturing said polymer emulsion.

### Background Art

As inkjet recording methods have advanced in their resolution and their performance in recent years, a lot of expectations have been placed on pigment inks having excellent water-resistance and weather-resistance as a substitute for conventional dye inks, and various studies have been conducted on the pigment inks.
However, pigments are not dissolved in water. Therefore, there is a problem that unless a binder resin is used to maintain the dispersion, the dispersion state of the pigment cannot be maintained in the aqueous inkjet recording liquid, thus causing clogging in heads. Further, pigments themselves have no fixing property to recording paper and OHP sheets. Therefor, unless a binder resin is used as a fixing agent, an optical density (hereinafter called "OD value"), wear-resistance, and water-resistance, which are required as printed matter, have not been able to be satisfied. That is, the binder resin is indispensable for pigment-type aqueous inkjet recording liquids in terms of the clogging-preventing property, discharge stability, OD value, wear-resistance, water-resistance, and the like.

Patent literature 1 discloses an ink composition containing water, a coloring agent, and particles of an acrylic silicon-based resin.
Patent literature 2 discloses a recording ink containing water, a coloring agent, and a silicone-modified acrylic resin that does not contains hydrolysable silyl group.
Patent literature 3 discloses an inkjet recording liquid containing an emulsion which is obtained by radically polymerizing an ethylene unsaturated monomer including an ethylene unsaturated monomer having an alkoxysilyl group in water under the presence of a radically-reactive emulsifier, as well as a pigment and an aqueous medium.
The inkjet recording liquid disclosed in each of the above-mentioned patent literatures has an advantageous effect in some extent in comparison with inkjet recoding liquids that do not use any binder resin.

However, as the use of inkjet recording methods has spread in various fields in recent years, the requirements in terms of the OD value and wear-resistance have become more stringent. As a result, none of the related-art inkjet recording liquids disclosed in the above-mentioned patent literatures has been able to satisfy these stringent requirements.

### Citation List

### Patent Literature

[Patent Literature 1] Japanese Unexamined Patent Application Publication No. 9-235499
[Patent Literature 2] Japanese Unexamined Patent Application Publication No. 2006-282986
[Patent Literature 3] Japanese Unexamined Patent Application Publication No. 2002-294105

### Summary of Invention

### Technical Problem

An object of the present invention is to provide a pigment-type aqueous inkjet recording liquid capable of improving the clogging in nozzles and providing stable discharge, and having excellent physical properties required as an inkjet recoding liquid, in particular an OD value and wear-resistance.

### Solution to Problem

The inventors of the present invention have found out that the presence or absence of large particles in the polymer emulsion used as the binder resin and their quantity have a large effect on an OD value and wear-resistance of the printed matter formed from the inkjet recoding liquid.
That is, a first invention relates to a method of manufacturing a polymer emulsion obtained by radically polymerizing a radically-polymerizable unsaturated monomer (a), including

2

a step of dropping a monomer pre-emulsion containing 0.1 to 5 wt.% of a radically-polymerizable unsaturated monomer having a carboxyl group (a1), 0.1 to 20 wt.% of a radically-polymerizable unsaturated monomer having an alkoxysilyl group (a2), another radically-polymerizable unsaturated monomer (a3) that can be copolymerized with the monomers (a1) and (a2), an emulsifier in an amount of no less than 0.1 wt.pts. and less than 5 wt.pts. based on 100 wt.pts. of the total of the monomers (a1) to (a3), and water, and of which monomer pre-emulsion, a volume average particle diameter of a monomer droplet being 0.5 $\mu$m and no greater than 10 $\mu$m as measured by a particle counting method, on a polymerization site that contains water, an emulsifier, and an aqueous polymerization initiator selected from persulfates and tertiary butyl hydroperoxide, and does not contains the monomer pre-emulsion (however, the total amount of the emulsifier is greater than 0.1 wt.pts. and not greater than 5 wt.pts.), and carrying out radical polymerization, in which D50 particle diameter of the polymer measured by a dynamic light scattering method is not less than 100 nm and not greater than 150 nm, and a number of ultra-large particles of 1.5 $\mu$m or greater in the polymer emulsion when converted to a solid content concentration 0.1% is $5.0 \times 10^5$/cm$^3$ or fewer as measured by a particle counting method. Further, it is preferable that no large particle having a particle diameter of 0.5 $\mu$m or greater is observed in the dynamic light scattering method.

Further, a second invention relates to a polymer emulsion obtained by radically polymerizing a radically-polymerizable unsaturated monomer (a), obtained by radically polymerizing a radically-polymerizable unsaturated monomer (a) containing, based on 100 wt.% of the radically-polymerizable unsaturated monomer (a), 0.1 to 5 wt.% of a radically-polymerizable unsaturated monomer having a carboxyl group (a1), 0.1 to 20 wt.% of a radically-polymerizable unsaturated monomer having an alkoxysilyl group (a2), another radically-polymerizable unsaturated monomer (a3) that can be copolymerized with the monomers (a1) and (a2), by using an emulsifier in an amount of greater than 0.1 wt.pts. and no greater than 5 wt.pts. based on 100 wt.pts. of the radically-polymerizable unsaturated monomer (a), water, and an aqueous polymerization initiator selected from persulfates and tertiary butyl hydroperoxide, in which D50 particle diameter of the polymer as measured by a dynamic light scattering method is not less than 100 nm and not greater than 150 nm, and a number of ultra-large particles of 1.5 $\mu$m or greater in the polymer emulsion when converted to a solid content concentration 0.1 % is $5.0 \times 10^5$/cm$^3$ or fewer as measured by a particle counting method. Further, it is preferable that no large particle having a particle diameter of 0.5 $\mu$m or greater is observed in the dynamic light scattering method. Further, the polymer emulsion manufactured by the above-described method of manufacturing the polymer emulsion is preferably used as an aqueous inkjet recording liquid containing that polymer emulsion and a pigment.

Further, a third invention relates to an aqueous inkjet recording liquid containing a polymer emulsion and a pigment, in which:

the polymer emulsion is obtained by radically polymerizing a radically-polymerizable unsaturated monomer (a) containing, based on 100 wt.% of the radically-polymerizable unsaturated monomer (a), 0.1 to 5 wt.% of a radically-polymerizable unsaturated monomer having a carboxyl group (a1), 0.1 to 20 wt.% of a radically-polymerizable unsaturated monomer having an alkoxysilyl group (a2), another radically-polymerizable unsaturated monomer (a3) that can be copolymerized with the monomers (a1) and (a2), by using an emulsifier in an amount of greater than 0.1 wt.pts. and no greater than 5 wt.pts. based on 100 wt.pts. of the radically-polymerizable unsaturated monomer (a), water, and an aqueous polymerization initiator selected from persulfates and tertiary butyl hydroperoxide; D50 particle diameter of the polymer as measured by a dynamic light scattering method is not less than 100 nm and not greater than 150 nm; and a number of ultra-large particles of 1.5 $\mu$m or greater in the polymer emulsion when converted to a solid content concentration 0.1% is $5.0 \times 10^5$/cm$^3$ or fewer as measured by a particle counting method. Further, it is preferable that no large particle having a particle diameter of 0.5 elm or greater is observed in the dynamic light scattering method.

Further, the polymer weight is preferably no less than 0.1 wt.% and no greater than 20 wt.% based on the total weight of the aqueous inkjet recording liquid.

Further, the pigment is preferably no less than 0.5 wt.% and no greater than 10 wt.% based on the total weight of the aqueous inkjet recording liquid.

## Advantageous Effects of Invention

According to the present invention, it becomes possible to provide a pigment-type aqueous inkjet recording liquid capable of improving the clogging in nozzles and providing stable discharge, and having excellent physical properties required as an inkjet recoding liquid, in particular an OD value and wear-resistance.

## Description of Embodiments

In short, an aqueous inkjet recording liquid according to the present invention uses a polymer emulsion which is obtained by emulsion polymerization of a radically-polymerizable unsaturated monomer containing a specific amount of radically-polymerizable unsaturated monomer having (a) carboxyl group(s) (a1) and a specific amount of radically-polymerizable unsaturated monomer having (an) alkoxysilyl group(s) (a2) as essential ingredients for the binder resin, and in which an amount of large particles is small.

D50 particle diameter of the polymer in the polymer emulsion according to the present invention is 100 to 150 nm as measured by a dynamic light scattering method. Further, in the polymer emulsion according to the present invention, it is preferable that no large particle of 0.5 $\mu$m (=500nm) or greater is observed in a dynamic light scattering method using "Microtrack UPA150" (Leeds & Northrup Co.). "D50 particle diameter" in the present invention is a particle diameter corresponding to 50% of volume distribution cumulative amount in a particle distribution curve obtained by a dynamic light scattering method. Specifically, D50 particle diameter can be obtained by diluting the polymer emulsion to about 0.01 to 0.1% in terms of solid content and then by using "Microtrack UPA150" (Leeds & Northrup Co.).

When D50 particle diameter of the polymer emulsion is smaller than 100 nm, the thixotropy becomes excessively larger, thus making the polymer emulsion inappropriate for an inkjet recoding liquid. On the other hand, when D50 particle diameter of the polymer emulsion exceeds 150 nm, the ratio of the polymer having a large particle diameter increases. Therefore, only printed matter having a low OD value and poor wear-resistance can be obtained from an inkjet recoding liquid using the polymer emulsion like this.

Further, as stated below, the polymer emulsion can contain large particles of 0.5 $\mu$m or greater (=500nm). However, in the case of the polymer emulsion in which D50 particle diameter is 100 to 150 nm, the ratio of large particles is fundamentally small. Therefore, for the polymer emulsion according to the present invention, it is preferable that no large particle of 0.5 $\mu$m or greater is observed in measurement based on a dynamic light scattering method using Microtrack UPA150.

For a polymer emulsion used for an aqueous inkjet recording liquid according to the present invention, it is preferable that no large particle of 0.5 $\mu$m or greater is observed in measurement based on a dynamic light scattering method using Microtrack UPA150. However, in a particle counting method in which the lower limit of measurement is 0.5 $\mu$m and particle diameters greater than or equal to that are in the preferable measurement range, the presence of large particles of 0.5 $\mu$m or greater is verified. Specifically, the presence of large particles can be verified by diluting a polymer emulsion having a solid content of about 40% to about 0.001 to 0.05% in terms of solid content with distilled water so that the total number of particles of 0.5 $\mu$m or greater becomes about 5000/cm$^3$, and then by using "Accusizer" (PARTICLE SIZING SYSTEMS Co. (U.S.)). For a polymer emulsion used for an aqueous inkjet recording liquid according to the present invention, the number of ultra-large particles of 1.5 $\mu$m or greater, when measured in the above-mentioned solid-content range and converted to a solid content 0.1%, is $5.0 \times 10^5/cm^3$ or fewer, and is preferably $3.0 \times 10^5/cm^3$ or fewer, and is most ideally zero.

Even when D50 particle diameter is 100 to 150 nm as measured by the dynamic light scattering method, if the number of ultra-large particles of 1.5 $\mu$m or greater is greater than $5.0 \times 10^5/cm^3$ as measured by the particle counting method and converted to 0.1 %, only printed matter having a low OD value and poor wear-resistance can be obtained from an inkjet recoding liquid using the polymer emulsion like this.

Note that the solid content of a polymer emulsion can be obtained by a dry weight method. Specifically, the solid content can be measured by the dry weight method by taking off a certain amount of the obtained polymer emulsion, drying the taken-off portion at 150°C for 20 minutes, and using the following formula. Solid content (wt%) = (Weight of polymer after being dried/Weight of polymer emulsion before being dried) $\times$ 100

Incidentally, having the particle size distribution of the polymer emulsion obtained by the dynamic light scattering method and the particle counting method that satisfies the above-mentioned condition is not enough as an emulsion for an aqueous inkjet recording liquid.

It is important to use a radically-polymerizable unsaturated monomer having (an) alkoxysilyl group(s) (a2) in an amount of 0.1 to 20 wt.% based on 100 wt.% of the total of the monomers of the radically-polymerizable monomer as one of the radically-polymerizable unsaturated monomers for forming a polymer in the polymer emulsion.

When the radically-polymerizable unsaturated monomer having (an) alkoxysilyl group(s) (a2) is less than 0.1 wt.%, the OD value becomes smaller and the wear-resistance of the printed matter becomes significantly poorer even when the particle size distribution of the formed polymer emulsion satisfies the above-mentioned condition. It is believed that most of the alkoxysilyl groups are hydrolyzed when the polymer emulsion is formed and thereby contribute to the formation of internal cross-links of polymer particles. Further, it is believed that part of the alkoxysilyl groups also contributes to the formation of inter-particle cross-links between polymer particles and to inter-particle cross-links between the polymer and the pigment. Therefore, when the amount of the alkoxysilyl group is excessively small, the intra-particle cross-links and the inter-particle cross-links become fewer. As a result, it is considered that the OD value becomes lower and the wear-resistance of the printed matter becomes significantly poorer.

On the other hand, when a radically-polymerizable unsaturated monomer containing the radically-polymerizable unsaturated monomer having (an) alkoxysilyl group(s) (a2) in an amount greater than 20 wt.% is used to form a polymer emulsion, the polymerization becomes very difficult because the ethylene unsaturated monomer having (an) alkoxysilyl group(s) is very hydrophobic. Further, since the ethylene unsaturated monomer having (an) alkoxysilyl group(s) is a cross-link component, it is also a component that deteriorates the polymerization stability. Therefore, in ordinary emulsion polymerization, when a cross-link component is contained in an amount of 20% or greater, particles condense with each other during the polymerization, thus preventing the formation of a stable polymer emulsion.

Examples of the radically-polymerizable unsaturated monomer having (an) alkoxysilyl group(s) (a2) include γ-methacryloxypropylmethyl dimethoxysilane, γ-methacryloxypropyl trimethoxysilane, vinyl triethoxysilane, and vinyl trimethoxysilane.

A polymer emulsion used for an aqueous inkjet recording liquid according to the present invention can be obtained by various methods.

For example, a polymer emulsion used for an aqueous inkjet recording liquid whose particle size distribution as measured by a dynamic light scattering method and a particle counting method satisfies the above-mentioned condition can be obtained by

preparing a monomer pre-emulsion containing 0.1 to 5 wt.% of a radically-polymerizable unsaturated monomer having (a) carboxyl group(s) (a1), 0.1 to 20 wt.% of a radically-polymerizable unsaturated monomer having (an) alkoxysilyl group(s) (a2), another radically-polymerizable unsaturated monomer (a3),

an emulsifier in an amount of no less than 0.1 wt.pts. and less than 5 wt.pts. based on 100 wt.pts. of the total of the monomers (a1) to (a3), and water, and

of which monomer pre-emulsion, a volume average particle diameter of a monomer droplet being 0.5 to 10 μm as measured by a particle counting method,

dropping the monomer pre-emulsion on a polymerization site that contains water, an emulsifier, and an aqueous polymerization initiator, and does not contains the monomer pre-emulsion, and

carrying out radical polymerization.

The monomer (a1) is explained.

The radically-polymerizable unsaturated monomer having (a) carboxyl group(s) (a1) is a very hydrophilic monomer, and has a large effect on the dispersion stability of the monomer pre-emulsion and the dispersion stability of the polymer emulsion. It is important to use the radically-polymerizable unsaturated monomer having (a) carboxyl group(s) (a1) in an amount of 0.1 to 5 wt.% based on 100 wt.% of the total of the monomers (a1) to (a3) used in the radical polymerization, and preferably in an amount of 0.5 to 2.5 wt.%. When the amount is 0.1 wt.% or smaller, the dispersion stability of the monomer pre-emulsion and the dispersion stability of the polymer emulsion become poor. Further, the stability during the polymerization becomes also poor, thus preventing the formation of a uniform and smooth polymer emulsion. Even if a polymer emulsion can be somehow obtained, the viscosity of the polymer emulsion will change over time. On the other hand, when the radically-polymerizable unsaturated monomer having (a) carboxyl group(s) (a1) is used in an amount greater than 5 wt.%, the water-resistance of the printed matter becomes poorer.

Examples of the radically-polymerizable unsaturated monomer having (a) carboxyl group(s) (a1) include acrylic acid, methacrylic acid, itaconic acid, maleic acid, and 2-methacryloyl propionic acid.

The monomer (a3) is explained.

The monomer (a3) used in the present invention is a radically-polymerizable monomer other than the above-mentioned monomers (a1) and (a2). The monomer (a3) used in the present invention is preferably selected as appropriate so that the glass transition temperature (Tg) of the formed polymer becomes 30 to -30°C.

The glass transition temperature (Tg) of the polymer in the present invention is theoretically derived by the following formula [II]:

$$1/Tg = [(W1/Tg1)+(W2/Tg2)+\ldots(Wn/Tgn)]/100 \quad [II]$$

where W1 is wt.% of monomer 1; Tg1 is glass transition temperature (°K) of homopolymer formed from monomer 1 alone;

W2 is wt.% of monomer 2; Tg2 is glass transition temperature (°K) of homopolymer formed from monomer 2 alone;

Wn is wt.% of monomer n; and Tgn is glass transition temperature (°K) of homopolymer formed from monomer n alone (where W1+W2+ .... +Wn = 100).

Note that if an emulsifier having a radically-polymerizable unsaturated group is used as the emulsifier that is used when a radically-polymerizable unsaturated monomer is polymerized in an aqueous medium, the emulsifier having the radically-polymerizable unsaturated group is not included in the monomer in the identification of the structure of the radically-polymerizable unsaturated monomer and in the calculation of Tg of the copolymer.

Examples of the monomer (a3) like this include:

acrylic esters such as methyl acrylate (-8°C (Tg of homopolymer (hereinafter omitted))), ethyl acrylate (-20°C), butyl acrylate (-45°C), and 2-ethylhexyl acrylate (-55°C);

methacrylic esters such as methyl methacrylate (100°C), ethyl methacrylate (65°C), butyl methacrylate (20°C), 2-ethylhexyl methacrylate (-10°C), and cyclohexyl methacrylate (66°C);

vinyl esters such as vinyl acetate (30°C) and tertiary vinyl carboxylate;

heterocyclic vinyl compounds such as vinyl pyrolidone;

$\alpha$-olefins such as ethylene and propylene;

dienes such as butadiene;

monomers containing a glycidyl group such as glycidyl methacrylate (41°C) and allylglycidyl ether;

monomers containing an amino group such as dimethylaminoethyl methacrylate (18°C);

monomers containing a carboxylic acid amide group such as acrylamide (150°C);

monomers containing a cyano group such as acrylonitrile (96°C); and

vinyl monomers such as styrene (100°C) and divinylbenzene.

The monomer pre-emulsion is explained.

To obtain a polymer emulsion that is suitable for use in an aqueous inkjet recording liquid according to the present invention, it is important to obtain a monomer pre-emulsion whose monomer droplet has a volume average particle diameter of 0.5 to 10 $\mu$m as measured by a particle counting method from the above-mentioned monomers (a1) to (a3), an emulsifier in an amount of no less than 0.1 wt.pts. and less than 5 wt.pts. based on 100 wt.pts. of the total of the above-mentioned monomers (a1) to (a3), and water.

In the emulsion polymerization, the monomer used in the polymerization dissolves from a monomer droplet into the water little by little in very small quantities and the polymerization advances in the water. That is, the polymerization site of the emulsion polymerization is not in the monomer droplet but is a micelle composed of the emulsifier generated in the water phase. Therefore, to obtain a polymer emulsion having uniform composition and particle size distribution, it is essential to allow the monomer used in the polymerization to dissolve smoothly and constantly into the water.

The radically-polymerizable unsaturated monomer having (an) alkoxysilyl group(s) (a2) is a hardly-water-soluble monomer that is very hydrophobic. To polymerize the hydrophobic monomer (a2) like this in a uniform and reliable manner, it is necessary to swiftly dissolve the hardly-water-soluble monomer (a2) from the monomer droplet to the water.

To that end, it is effective to use a monomer pre-emulsion whose monomer droplet has a volume average particle diameter of 0.5 to 10 $\mu$m, and extremely effective to use a monomer pre-emulsion having a volume average particle diameter of 0.5 to 5 $\mu$m. When the volume average particle diameter of the monomer droplet in the monomer pre-emulsion is greater than 10 $\mu$m, the radically-polymerizable unsaturated monomer having (an) alkoxysilyl group(s) (a2) cannot be easily dissolved from the monomer droplet to the water. As a result, the radically-polymerizable unsaturated monomer (a2) cannot be reliably used in the formation of polymer particles, is left unused, and forms ultra-large particles and/or coagulations of 1.5 $\mu$m or greater as measured by a particle counting method.

The monomer pre-emulsion having the particle size state like this can be formed by using, for example, a batch-type homomixer, an ultrasound-type emulsion machine, or high-pressure-type homogenizer, and adjusting its stirring speed, frequency, and/or pressure as appropriate.

Note that the particle diameter of the monomer pre-emulsion is preferably as small as possible. This is because the dissolving rate of the monomer from a monomer droplet to water increases with the decrease in the particle diameter of the monomer pre-emulsion. However, in general, it is very difficult to obtain a monomer pre-emulsion having a volume average particle diameter smaller than 0.5 $\mu$m even when the above-mentioned apparatus is used.

Therefore, as stated previously, the volume average particle diameter of a monomer pre-emulsion according to the present invention is preferably 0.5 to 10 $\mu$m as measured by a particle counting method.

Note that, similarly to the verification of large particles of a polymer emulsion, the volume average particle diameter of a monomer pre-emulsion can be obtained by diluting the monomer pre-emulsion with distilled water so that the monomer concentration becomes about 0.001 to 0.05%, and then by using "Accusizer" (PARTICLE SIZING SYSTEMS Co. (U.S.)).

The emulsifier constituting a monomer pre-emulsion is explained. The amount of the emulsifier is no less than 0.1 wt.pts. and less than 5 wt.pts. based on 100 wt.pts. of the total of the above-mentioned monomers (a1) to (a3), and is preferably no less than 1 wt.pts. and no greater than 3 wt.pts. When the amount of the emulsifier is 5 wt.pts. or greater, the water-resistance of the printed matter is lowered. On the other hand, when the amount of the emulsifier is less than 0.1 wt.pts., the dispersion state of the monomer pre-emulsion cannot be stably maintained.

In the present invention, an anionic emulsifier can be solely used as the emulsifier, or an anionic emulsifier and a nonionic emulsifier can be used in combination.

Further, the emulsifier may be a reactive emulsifier having a radically-polymerizable functional group, a non-reactive emulsifier having no radically-polymerizable functional group, or a combination thereof. It is preferable to use a reactive emulsifier having a radically-polymerizable functional group, because by using it, the water-resistance of the printed matter improves.

Among the emulsifiers that can be used in the present invention, examples of the reactive emulsifier include an anionic or nonionic emulsifier having at least one radically-polymerizable unsaturated double bond in the molecule such as a sulfosuccinate-based emulsifier (examples of a commercially-available product include LATEMUL S-120P and S-180A from Kao Corporation, and ELEMINOL JS-2 from Sanyo Chemical Industries Ltd.), and an alkylphenol ether-based emulsifier (examples of a commercially-available product include AQUARON KH-20 and RN-20 from DAI-ICHI KOGYO SEIYAKU Co., Ltd).

Among the emulsifiers that can be used in the present invention, examples of the non-reactive emulsifier include:

anion-based non-reactive emulsifiers such as polyoxyethylene alkylphenyl ether sulfate, polyoxyethylene polycyclic-phenyl ether sulfate, and polyoxyethylene alkyl ether sulfate;
polyoxyethylene alkylphenyl ethers such as polyoxyethylene nonyl phenyl ether and polyoxyethylene octyl phenyl ether;
polyoxyethylene alkyl ethers such as polyoxyethylene lauryl ether, polyoxyethylene stearyl ether, and polyoxyethylene oleyl ether;
polyoxy polycyclic-phenyl ethers such as polyoxyethylene distyrenated phenyl ether; and
nonion-based non-reactive emulsifiers such as polyoxyethylene sorbitan fatty ester.

Specifically, examples of the anion-based non-reactive emulsifier include HITENOL NF-08 [repetitive number of ethylene oxide units (hereinafter called "EO unit number"): 8], NF-17 (EO unit number: 17) [from DAI-ICHI KOGYO SEIYAKU Co., Ltd.], and ELEMINOL ES-12 (EO unit number: 6), ES-30 (EO unit number: 15), and ES-70 (EO unit number: 35) [from Sanyo Chemical Industries Ltd.].

Examples of the nonion-based non-reactive emulsifier include EMULGEN 1108 (EO unit number: 8), 1118 S-70 (EO unit number: 18), 1135S-70 (EO unit number: 35), 1150S-70 (EO unit number: 50) [from Kao Corporation]. The above-mentioned non-reactive emulsifiers may be used solely or in combination.

Note that publicly-known non-reactive emulsifiers and reactive emulsifiers may be used.

To obtain a polymer emulsion that is suitable for use in an aqueous inkjet recording liquid according to the present invention, it is also important to drop the monomer pre-emulsion on a polymerization site that contains water, an emulsifier, and an aqueous polymerization initiator, and does not contains the monomer pre-emulsion, and thereby to carry out radical polymerization.

A method in which a large amount of water and part of a monomer pre-emulsion for dropping are put in a reaction vessel and the remaining part of the monomer pre-emulsion for dropping and a polymerization initiator are added to the reaction vessel, and a method in which a large amount of water, a polymerization initiator, and part of a monomer pre-emulsion for dropping are put in a reaction vessel and the remaining part of the monomer pre-emulsion for dropping is added to the reaction vessel are ordinarily used.

However, when a hardly-water-soluble radically-polymerizable unsaturated monomer having (an) alkoxysilyl group(s) (a2) is used as in the case of the present invention, it is important to polymerize and thereby consume the monomer (a2) that is dissolved from a monomer droplet into water without leaving the monomer (a2) in the polymerization site as much as possible and without delay after the monomer (a2) is supplied to the polymerization site. That is, the dissolution of the monomer (a2) and the disappearance of the monomer (a2) by the swift polymerization accelerate the dissolution of additional monomer (a2) and thereby advance the polymerization reaction smoothly.

Therefore, in the present invention, it is essential not to put part of the monomer pre-emulsion in the reaction vessel. If the part of the monomer pre-emulsion is put in the reaction vessel in advance, when the remaining part of the monomer pre-emulsion is dropped from the dropping tank, the hardly-water-soluble monomer (a2) contained in the monomer that is supplied by the dropping remains in the polymerization site until the hardly-water-soluble monomer (a2) contained in the monomer that is originally present in the reaction vessel is consumed by the polymerization, thus causing the formation of ultra-large particles and coagulations.

Note that in the present invention, the polymerization site containing water, an emulsifier, and an aqueous polymerization initiator means the presence of these three substances when the monomer contained in the monomer pre-emulsion is polymerized. That is, in addition to the method in which water, an emulsifier, and an aqueous polymerization initiator are put in a reaction vessel equipped with heating means and cooling means and a monomer pre-emulsion is dropped into the reaction vessel, a method in which water and an emulsifier are put in a reaction vessel similar to the above-mentioned reaction vessel and a monomer pre-emulsion and a aqueous polymerization initiator are dropped from their respective individual dropping tanks into this reaction vessel may be also employed. Further, a method in which water and an emulsifier are put in a reaction vessel similar to the above-mentioned reaction vessel and a monomer pre-emulsion containing an aqueous polymerization initiator is dropped into this reaction vessel may be also employed.

Examples of the emulsifier put in the reaction vessel include substances similar to those shown above as examples when the monomer pre-emulsion is obtained.

It is important that the total amount of the emulsifier constituting the monomer pre-emulsion and the emulsifier put in the reaction vessel is greater than 0.1 wt.pts. and not greater than 5 wt.pts. based on 100 wt.pts. of the total of the monomers (a1) to (a3). When the total amount of the emulsifier is greater than 5 wt.pts., the water-resistance of the printed matter is lowered. On the other hand, when the amount of the emulsifier is 0.1 wt.pts. or smaller, the dispersion state of the polymer emulsion cannot be stably maintained.

Examples of the radical polymerization initiator that can be used in the present invention include persulfates such as potassium persulfate, ammonium persulfate, and sodium persulfate.

The amount of the polymerization initiator is preferably 0.1 to 1 wt.pts. based on 100 wt.pts. of the total of the monomers used in the emulsion polymerization, and more preferably 0.2 to 0.8 wt.pts. That is, the amount greater than 1 wt.pts. tends to lower the water-resistance, while the amount less than 0.1 wt.pts. tends to cause a problem in the polymerization stability.

As for the redox initiator, a combination of a peroxide-based initiator and a reducing agent is effective. Examples of the peroxide-based initiator include PERBUTYL H (tertiary butyl hydroperoxide), PERBUTYL O (tertiary butyl peroxy-2-ethyl hexanoate), cumene hydroperoxide, and p-menthane hydroperoxide. Examples of the reducing agent include Erbit N (sodium isoascorbate), L-ascorbic acid (vitamin C), sodium sulfite, sodium hydrogen sulfite, sodium pyrosulfite (SMBS), sodium hyposulfite (hydrosulfite).

A polymer emulsion used for an aqueous inkjet recording liquid according to the present invention can be obtained by a method other than the above-described methods.

For example, a method in which a polymerization reaction is initiated by dropping part of an aqueous polymerization initiator into a reaction vessel in a state where part of a monomer pre-emulsion is put in the reaction vessel in advance, and after the monomer containing the hardly-water-soluble monomer (a2), which is put in the reaction vessel in advance, is sufficiently consumed by the polymerization, the remaining part of the monomer pre-emulsion and the aqueous polymerization initiator is dropped into the reaction vessel may be also employed. In this method, although the monomer pre-emulsion is present at the time when the polymerization is initiated, the monomer pre-emulsion disappears during the polymerization. Therefore, it is possible to suppress the formation of ultra-large particles and coagulations. The monomer concentration in the reaction vessel at the time of polymerization start is preferably 20 wt.% or lower. When the monomer concentration is greater than 20 wt.%, the reaction heat at the polymerization becomes excessively larger, making the control of the reaction temperature very difficult. As a result, a lot of coagulations are formed due to the deteriorated polymerization stability.

In short, in a polymer emulsion according to the present invention obtained by the above-described various methods, the amount of ultra-large particles of 1.5 μm or greater is extremely small.

A polymer emulsion according to the present invention is preferably neutralized with a volatile basic compound before being used. Examples of the volatile basic compound include ammonia; and amines such as monoethyl amine, dimethylethanol amine, diethylethanol amine, and methyl propanol amine. These substances may be used solely or in combination of two or more of them.

It is also possible, if necessary, to use a hydrophilic organic solvent in a polymer emulsion according to the present invention as long as the addition of the hydrophilic organic solvent does not impair the purpose and the advantageous effect of the present invention.

By containing the polymer emulsion according to the present invention like this and a pigment, it is possible to obtain an aqueous inkjet recording liquid according to the present invention.

The pigment used in the present invention is not limited to any particular pigments, and can be selected as appropriate according to the purpose. For example, either of an inorganic pigment and an organic pigment can be used. A pigment having excellent light stability is preferable.

Examples of the inorganic pigment include titanium oxide, iron oxide, calcium carbonate, barium sulfate, aluminum hydroxide, barium yellow, cadmium red, chrome yellow, and carbon black. Among them, the carbon black and the like are preferable.

The color of the inorganic pigment is not limited to any particular colors, and can be selected as appropriate according to the purpose. Examples include ones for black printing and ones for color printing. They can be used solely or in combination of two or more of them. Examples of the ones for black printing include carbon blacks (C. I. Pigment Black 7) such as furnace black, lamp black, acetylene black, and channel black, and metals such as copper, iron (C. I. Pigment Black 11), and titanium oxide.

Examples of the organic pigment include a phthalocyanine-based pigment, a quinacridon-based pigment, a quinacridon chinone-based pigment, an isoindolinone-based pigment, a quinophthalone-based pigment, a diketopyrrolopyrrol-based pigment, a perylene-based pigment, a perinone-based pigment, an indigo-based pigment, a thioindigo-based pigment, a dioxazine-based pigment, an anthraquinone-based pigment, a pyranthrone-based pigment, an anthanthrone-based pigment, a flavanthrone-based pigment, an indanthrone-based pigment, a fused polycyclic-based pigment such as metal complex-based pigment, a benzimidazolone-based organic pigment, an insoluble azo-based organic pigment, a fused azo-based organic pigment, and a soluble azo-based organic pigment.

Examples of the phthalocyanine-based pigment include C. I. Pigment Blues 15, 15:2, 15:3, 15:4, 15:5, 15:6, and 16, and C. I. Pigment Greens 7 and 36.

Examples of the quinacridon-based pigment include C. I. Pigment Violets 19 and 42, C. I. Pigment Reds 122, 192, 202, 206, 207, and 209, and C. I.Pigment Oranges 48 and 49.

Examples of the isoindolinone-based pigment include C. I. Pigment Yellows 109, 110, and 173, and C. I. Pigment Orange 61.

Examples of the isoindoline-based pigment include C. I. Pigment Yellows 139 and 185, C. I. Pigment Oranges 66 and 69, C. I. Pigment Red 260, and C. I. Pigment Brown 38.

Examples of the quinophthalone-based pigment include C. I. Pigment Yellow 138.

Examples of the diketo-pyrrolo-pyrrol-based pigment include C. I. Pigment Reds 254, 255, 264, and 272, and C. I. Pigment Oranges 71 and 73.

Examples of the benzimidazolone-based pigment include C. I. Pigment Yellows 120, 151, 154, 156, 175, 180, 181, and 194, C. I. Pigment Oranges 36, 60, 62, and 72, C. I. Pigment Reds 171, 175, 176 185, and 208, C. I. Pigment Violet 32, and C. I. Pigment Brown 25.

Examples of the insoluble azo-based pigment include C. I. Pigment Reds 1, 2, 3, 4, 5, 6, 7, 8, 9, 10, 11, 12, 13, 14, 15, 16, 17, 18, 20, 21, 22, 23, 31, 32, 37, 38, 41, 95, 111, 112, 114, 119, 136, 146, 147, 148, 150, 164, 170, 184, 187, 188, 210, 212, 213, 222, 223, 238, 245, 253, 256, 258, 261, 266, 267, 268, and 269, C. I. Pigment Oranges 1, 2, 5, 6, 13, 15, 16, 22, 24, 34, 38, and 44, C. I. Pigment Violets 13, 25, 44, and 50, C. I. Pigment Brown 1, C. I. Pigment Yellows 1, 2, 3, 5, 6, 10, 12, 13, 14, 17, 49, 55, 60, 63, 65, 73, 74, 75, 81, 83, 87, 90, 97, 98, 106, 111, 113, 114, 116, 121, 124, 126, 127, 130, 136, 152, 165, 167, 170, 171, 172, 174, 176, and 188, and C. I. Pigment Blue 25.

Examples of the fused azo-based pigment include C. I. Pigment Yellows 93, 94, 95, 128, and 166, C. I. Pigment Orange 31, C. I. Pigment Reds 144, 166, 214, 220, 221, 242, 248, and 262, and C. I. Pigment Browns 23, 41 and 42.

Examples of the perylene-based pigment include C. I. Pigment Reds 123, 149, 178, 179, 190, and 224, C. I. Pigment Violet 29, and C. I. Pigment Blacks 31 and 32.

Examples of the perinone-based pigment include C. I. Pigment Orange 43, C. I. Pigment Red 194, and Vat Red 14.

Examples of the indigo-based pigment include C. I. Pigment Blues 63, and 73015:X.

Examples of the thioindigo-based pigment include C. I. Pigment Reds 88 and 181.

Examples of the dioxazine-based pigment include C. I. Pigment Violets 23 and 37.

Examples of the anthraquinone-based pigment include C. I. Pigment Yellows 99, 108, 123, 147, 193, and 199, and C. I. Pigment Reds 83, 89, and 177.

Examples of the pyranthrone-based pigment include C. I. Pigment Reds 216 and 226, and C. I. Pigment Oranges 40 and 51.

Examples of the anthanthrone-based pigment include C. I. Pigment Red 168, C. I. Pigment Violet 31, and Vat Orange 3.

Examples of the flavanthrone-based pigment include C. I. Pigment Yellow 24, and Vat Yellow 1.

Examples of the indanthrone-based pigment include C. I. Pigment Blues 60 and 64, and Vat Blue 4.

Examples of the metal complex-based pigment include C. I. Pigment Green 10, C. I. Pigment Yellows 117, 129, 150, 153, 177, 179, 257, and 271, and C. I. Pigment Oranges 59, 65 and 68.

Examples of the diketo-pyrrolo-pyrrol-based pigment include C. I. Pigment Reds 254, 255, 264, and 272, and C. I. Pigment Oranges 71 and 73.

The average primary particle diameter of pigment particles in an aqueous inkjet recording liquid according to the present invention is preferably 5 to 1000 nm, and more preferably 5 to 150 nm. In order to adjust the particle diameter of the pigment, it is preferable to carry out wet pulverization or dry pulverization, such as salt-milling or solvent-milling, of a crude pigment or a pigment at a pigment grade, and thereby to use the pigment that is pulverized in advance. The pigment that is pulverized in advance is called "aqueous pigment dispersion body" in the present invention.

The salt-milling is a technique in which: a small amount of an aqueous solvent is added to a mixture of an organic pigment and an aqueous mineral salt; the mixture is strongly kneaded by a kneading machine such as a kneader while controlling the temperature at 30 to 65°C by water cooling or the like; the pulverized mixture is put into water; and the aqueous mineral salt and the aqueous solvent are dissolved and removed.

The aqueous mineral salt is added as a grinding-assistant agent for the organic pigment, and is used in an amount of 2 to 20 times of the organic pigment in weight and preferably in an amount of 3 to 10 times of the organic pigment in weight. Examples of the aqueous mineral salt include sodium chloride, potassium chloride, and sodium sulfate. The aqueous solvent is added to prevent caking and crystallization, and is used in the mixture in an amount of 0.5 to 5 times of the organic pigment in weight and preferably in an amount of 0.5 to 3 times of the organic pigment in weight. Examples of the aqueous solvent include diethylene glycol, dipropylene glycol, and monoalkyl ether thereof.

In the present invention, a surface treatment pigment that is obtained by pulverizing a pigment under the presence of a pigment derivative containing an anionic group can be also used.

The surface treatment pigment contains an anionic group such as a sulfone group, a carboxy group, and a phosphoric acid group on the pigment surface. As for the method for introducing an anionic group, a method in which an anionic group is introduced into the ingredient of a pigment to convert the ingredient into a pigment, a method in which an anionic group is introduced onto the surface of a pigment through a surface treatment reaction, and a method in which pigment particles are surface-treated with a pigment derivative that is obtained by introducing an anionic group into a compound having a skeletal structure similar to the pigment may be employed. However, in terms of stability, the method in which pigment particles are surface-treated with a pigment derivative that is obtained by introducing an anionic group into a compound having a skeletal structure similar to the pigment is preferred.

Further, in the present invention, a substance that is obtained by introducing an anionic group such as a carboxy group onto a carbon black surface by an oxidation treatment can be also used as a pigment.

The aqueous pigment dispersion body used in the present invention is obtained by dispersing a surface treatment pigment having an anionic group into water whose pH is adjusted to 7 to 11, preferably to 8 to 10 with alkaline metal hydroxide, ammonia, or organic amine. As for the water, refined water containing no metal ion having a valence of two or greater, pure water, or water equivalent thereto is used.

Further, the aqueous pigment dispersion body can be converted into a finer pigment dispersion body through a dispersion process. As for the dispersion machine used in the dispersion process, Paint Conditioner (Red Devil), a ball mill, a sand mill ("DYNO-MILL" from Shinmaru Enterprises and the like), an attritor, a pearl mill ("DCP Mill" from Eirich and the like), a co-ball mill, a homomixer, a homogenizer ("CLEARMIX" from M TECHNIQUE and the like), a wet jet mill ("Genus PY" from Genus and "Nanomizer" from NANOMIZER), and the like can be used. When media is used as a dispersion machine, glass beads, zirconia beads, alumina beads, magnetic beads, and styrene beads can be used.

A aqueous inkjet recording liquid according to the present invention contains a polymer derived from a polymer emulsion according to the present invention preferably in an amount of 0.1 to 20 wt.% based on 100 wt.% of the aqueous inkjet recording liquid, and more preferably in an amount of 0.5 to 10 wt.%. The amount of the emulsifier and the polymerization initiator is relatively smaller in comparison with the monomer, and it can be presumed that most of the monomer is polymerized and forms a polymer. Therefore, the amount of the polymer in the polymer emulsion becomes closer to the solid content of the polymer emulsion. When the amount of the polymer in the aqueous inkjet recoding liquid is too small, the fixing property to paper and the like and/or the water-resistance are lowered. On the other hand, when the amount of the polymer in the aqueous inkjet recoding liquid is too large, the discharge stability, which is required as an aqueous inkjet recording liquid, tends to be impaired, thus causing clogging in nozzles more easily.

A aqueous inkjet recording liquid according to the present invention contains a pigment preferably in an amount of 0.5 to 10 wt.% based on 100 wt.% of the aqueous inkjet recording liquid, and more preferably in an amount of 2 to 8 wt.%. When the amount of the pigment is too small, the thickness of the printed matter is lowered. On the other hand, when the amount of the pigment is too larger, the discharge stability, which is required as an aqueous inkjet recording liquid, tends to be impaired, thus causing clogging in a nozzle more easily.

In an aqueous inkjet recording liquid according to the present invention, an anionic, cationic, nonionic, or amphoteric surfactant and/or a polymeric surfactant can be additionally added for adjusting the surface tension and/or adjusting the permeability into paper.

Examples of the anionic surfactant include fatty acid salt, alkylsulfuric acid ester salt, alkylaryl sulfonate, alkylnaphthalene sulfonate, dialkyl sulfonate, dialkyl sulfosuccinate, alkyldiaryl ether disulfonate, alkyl phosphate, polyoxyethylene alkyl ether sulfate, polyoxyethylene alkylaryl ether sulfate, naphthalene sulfonate formalin condensate, polyoxyethylene alkyl phosphoric ester salt, glycerol borate fatty ester, and polyoxyethylene glycerol fatty ester.

Examples of the nonionic surfactant include polyoxyethylene alkyl ether, polyoxyethylene alkylaryl ether, polyoxyethylene oxy-propene block copolymer, sorbitan fatty ester, polyoxyethylene sorbitan fatty ester, polyoxyethylene sorbitol fatty ester, glycerin fatty ester, polyoxyethylene fatty ester, polyoxyethylene alkylamine, a fluorine-based nonionic surfactant, and a silicone-based nonionic surfactant.

Examples of the cationic surfactant include alkylamine salt, quaternary ammonium salt, alkyl pyridinium salt, and alkyl imidazolium salt. Examples of the amphoteric surfactant include alkyl bataine, alkylamine oxide, and phosphadylcoline.

Examples of the polymeric surfactant include an acryl-based water-soluble resin, a styrene/acryl-based water-soluble resin, a water-soluble polyester resin, and a water-soluble polyamide resin.

It is also possible, if necessary, to use two types or more of an anionic surfactant, a cationic surfactant, a nonionic surfactant, a polymeric surfactant, and the like.

As for the water-based medium used in an aqueous inkjet recording liquid according to the present invention, it means water, an organic solvent mixable with water, and a mixture thereof. As water, ion exchange water from which metal ions and the like are removed or distilled water is used in amount of 49 to 95 wt.% of the recoding liquid.

The aqueous solvent used in an aqueous inkjet recording liquid according to the present invention is an organic solvent mixable with water, and is used to prevent the inkjet recoding liquid from drying and solidifying at a nozzle, to provide stable discharge of the recording liquid, and to prevent the inkjet recoding liquid from drying at a nozzle over time. Further, the aqueous solvent is used solely or in mixture in an amount of 1 to 50 wt.% of the recoding liquid and preferably in an amount of 2 to 25 wt.%.

Examples of the aqueous solvent include ethylene glycol, diethylene glycol, propylene glycol, 1,3-propanediol, triethylene glycol, polyethylene glycol, glycerin, tetraethylene glycol, dipropylene glycol, ketone alcohol, diethylene glycol monobutyl ether, ethylene glycol monobutyl ether, triethylene glycol monobutyl ether, ethylene glycol monoethyl ether, 1,2-hexanediol, N-methyl-2-pyrolidone, 2,4,6-hexanetriol, tetra furfuralcohol, 4-methoxy-4 methyl pentanone. Further, alcohols such as methanol, ethanol, and isopropyl alcohol may be also used for the purpose of accelerating the drying of the recording liquid.

It is also possible, if necessary, to use various additives shown below in a recoding liquid according to the present invention.

When the material to which the recording liquid is applied is permeable material such as paper, a penetrant can be added to accelerate the permeation of the recording liquid into the paper and thereby to accelerate the apparent drying of the recording liquid.

Examples of the penetrant include glycol ether such as diethylene glycol monobutyl ether, which is also mentioned above as example for the aqueous solvent, alkylene glycol, polyethylene glycol monolauryl ether, sodium lauryl sulfate, sodium dodecylbenzenesulfonate, sodium oleate, and sodium dioctyl sulfosuccinate. These substances are used in an amount of 0 to 5 wt.% of the recording liquid and preferably 0.1 to 5 wt.% of the recording liquid. The penetrant has a sufficient effect in the above-mentioned amount. When the amount of the penetrant is greater than the above-mentioned amount, the printing spreads and print-through occurs. Therefore, it is undesirable.

A preservative may be added to prevent mold and bacterial from growing in the aqueous inkjet recording liquid. Examples of the preservative include sodium dehydro acetate, sodium benzoate, sodium pyridinethione-1-oxide, zinc ridinethione-1-oxide, and amine salt such as 1,2-benzisothiazolone-3-one, and 1-benzisothiazolone-3-one. These substance are used in the recording liquid preferably in an amount of 0.05 to 1.0 wt.%.

A chelating agent is used to sequester metal ions in the aqueous inkjet recording liquid, and to prevent the precipitation of metal at a nozzle and the precipitation of insoluble substances in the recording liquid and the like. Examples of the chelating agent include ethylenediaminetetraacetic acid, sodium salt of ethylenediaminetetraacetic acid, ammonium salt of ethylenediaminetetraacetic acid, and tetraammonium salt of ethylenediaminetetraacetic acid. These substances are used in the recording liquid in an amount of 0.005 to 0.5 wt.%.

Further, a pH-adjusting agent such as amine, mineral salt, and ammonia, and a buffer solution such as phosphate can be used to adjust pH of the aqueous inkjet recording liquid and thereby to stabilize the recording liquid or provide stability with the recording liquid pipe in the recording device.

Further, an antifoaming agent can be added to prevent foam from forming at the time of discharging the aqueous inkjet recording liquid, circulation and migration through the pipe, or at the time of manufacturing the recording liquid.

An aqueous inkjet recording liquid according to the present invention is manufactured by dispersing an aqueous pigment dispersion body and a polymer emulsion into an aqueous medium, diluting as appropriate with water, and mixing another additive(s) with the aqueous medium. The dispersion can be carried out by using a disper, a sand mill, homogenizer, a ball mill, a paint shaker, an ultrasound dispersion machine, or the like. Further, the mixing and stirring can be carried out not only by the stirring with a conventional stirrer using a blade, but also by using a high-speed dispersion machine, an emulsion machine, or the like.

The obtained aqueous inkjet recording liquid is preferably filtered, before or after the dilution, with a filter of 0.65 μm or smaller in pore-diameter and further sufficiently filtered with a filter of 0.45 μm or smaller in pore-diameter. Prior to the filtration with the filter, the aqueous inkjet recording liquid can be filtered by centrifuging. By doing so, the clogging in the filtration with the filter can be reduced, thereby reducing exchanges of the filter.

Though depending on the type of recording device, the aqueous inkjet recording liquid is preferably adjusted to a liquid having a viscosity of 0.8 to 15 cps (25°C). The surface tension is preferably adjusted to 25 to 73 dyn/cm. Though not restricted, pH is preferably adjusted to weak alkalinity of 7 to 10.

**Examples**

The present invention is further explained hereinafter with reference to Examples and Comparative examples. However, the present invention is not limited to Examples shown below. Note that in the following explanation, both "pts." and "%" are values based on the weight.

[Example 1]

<Polymer emulsion>

A monomer pre-emulsion was prepared by emulsifying a mixture of 1.2 pts. of acrylic acid (as monomer (a1)), 6 pts. of Sila-Ace 210 (vinyl trimethoxysilane, from CHISSO CORPORATION) (as monomer (a2)), 40.5 pts. of methyl methacrylate (as monomer (a3)), 51.3 pts. of 2-ethylhexyl acrylate, 1.0 pts. of acrylamide, 1.5 pts. of AQUARON KH-20 (reactive emulsifier from DAI-ICHI KOGYO SEIYAKU Co., Ltd.) (as emulsifier), and 53.1 pts. of ion exchange water by using a batch-type homomixer. Then, the adjusted monomer pre-emulsion was put in a dropping tank.

Note that to maintain the measurement accuracy, the monomer pre-emulsion having a monomer concentration of about 60% was diluted with distilled water so that the concentration of particles of 0.5 $\mu$m or greater became about 5000/cm$^3$. The volume average particle diameter of the monomer pre-emulsion was obtained for a diluted solution having a monomer concentration of about 0.002% based on a particle counting method by using Accusizer from PARTICLE SIZING SYSTEMS Co. (U.S.), and the obtained volume average particle diameter was 3.0 $\mu$m.

A four-necked flask having a volume of 2L and equipped with a reflux condenser, a stirrer, a thermometer, a nitrogen-introducing pipe, and an ingredient inlet was used as a reaction vessel. Then, 89.4 pts. of ion exchange water was put in the reaction vessel and the solution was heated to 60°C while introducing nitrogen and stirring the solution. Next, 0.5 pts. of AQUARON KH-20 was added as an alkylphenol ether-based emulsifier in the reaction vessel, and 6 pts. of a 5% ammonium persulfate (hereinafter called "APS") aqueous solution (i.e., 0.3 pts. of ammonium persulfate) was also added at the same time.

After ten minutes after the addition of the 5% APS aqueous solution, the above-mentioned monomer pre-emulsion was continuously dropped from the dropping tank over five hours and 6 pts. of the 5% APS aqueous solution (i.e., 0.3 pts. of ammonium persulfate) was intermittently dropped from another dropping tank over five hours. During this process, the solution in the reaction vessel was maintained at 70°C.

After the dropping was completed, the solution was maintained at 70°C for three hours and aging was thereby carried out. After that, cooling was started. When cooled to 50°C, ammonia water was added and filtering was carried out by using a polyester filter cloth of 180 mesh. The coagulation that remained on the filter cloth was dried at 150°C for 20 minutes. The measured amount of the coagulation was 0.1 wt.% based on the total amount of the monomer, the emulsifier, and the polymerization initiator.

Part of the filtered polymer emulsion was taken out and dried at 150°C for 20 minutes, and its solid content concentration was obtained. The solid content concentration was 39.5%. Further, pH of the above-mentioned polymer emulsion was 8, and the viscosity was 50 mPa·s.

The measurement limit of the apparatus with regard to the density of particles of 0.5 $\mu$ or greater was about 5000/cm$^3$ or lower. Therefore, the filtered polymer emulsion was diluted to 0.002% in terms of the solid content concentration so that the density falls into the above-mentioned range. Then, D50 particle diameter was measured based on a dynamic light scattering method by using Microtrack UPA150 (Leeds & Northrup Co.). The measured D50 particle diameter was 130 nm.

Separately, the filtered polymer emulsion was diluted to 0.002% in terms of the solid content concentration. Then, for the diluted solution, the number of ultra-large particles of 1.5 $\mu$m or greater was measured based on a particle counting method by using Accusizer from PARTICLE SIZING SYSTEMS Co. (U.S.). When converted to a solid content 0.1%, the number of ultra-large particles of 1.5 $\mu$m or greater in the polymer emulsion was $1.0 \times 10^5$/cm$^3$.

Note that the glass transition temperature (hereinafter called "theoretical Tg") obtained from the monomer with the exclusion of vinyl trimethoxysilane was 5°C.

<Aqueous inkjet recording liquid>

A dispersion solution having a pigment concentration of 10 wt.% was obtained by stirring a mixture of 100 pts. of carbon black (C.I Pigment Black 7) and 900 ml of ion exchange water (as water) by using a homomixer.

A four-necked flask of 1000 ml was equipped with a stirring blade and a reflux condenser. Then, 125 pts. of the dispersion solution of carbon black prepared in the above-described method, 250 pts. of 60% nitric acid, 125 pts. of ion exchange water were put in the flask. After carrying out an oxidation process reaction for five hours under reflux at 110°C while stirring the solution, the resultant substance was washed with water.

Next, after remaining ions were eliminated by a reverse osmosis membrane, pH was adjusted to 9 to 10 with a caustic soda aqueous solution. After that, to eliminate large particles, large particles were removed by carrying out centrifuging. As a result, a carbon black aqueous dispersion body having a pigment content ratio of about 20% and an average particle diameter of about 100 nm was obtained.

A mixture of 18.8 pts. of the above-mentioned polymer emulsion having a solid content concentration of about 39.5 %, 37.5 pts. of the above-mentioned carbon black dispersion body having a pigment content ratio of 20%, 30 pts. of glycerin, 0.3 pts. of Surfynol 465 (from Air Products), 0.1 pts. of Surfynol 104E (from Air Products), and 13.4 pts. of ion exchange water was stirred and mixed by using a disper at 1000 rpm for one minute or was stirred and mixed by using a disper.

Then, it was confirmed that the solution became a uniform state. After that, an aqueous inkjet recording liquid was obtained by filtering the solution first with a membrane filter of 5 $\mu$m and then filtering with a membrane filter of 1 $\mu$m. The OD value and the wear-resistance of the obtained aqueous inkjet recording liquid were evaluated by a method described later.

[Examples 2 to 5]

A polymer emulsion was obtained by carrying out similar processes to those of Example 1 except that the monomer composition constituting the monomer pre-emulsion put in the dropping tank was changed to a composition shown in Table 1. An aqueous inkjet recording liquid was obtained by using the obtained polymer emulsion in a similar manner to that of Example 1, and similar evaluations were made.

[Examples 6 and 7]

The amount of AQUARON KH-20, which was the emulsifier constituting the monomer pre-emulsion put in the dropping tank, was changed to an amount shown in Table 1. Then, a polymer emulsion was obtained by changing the stirring conditions of the batch-type homomixer so that D50 particle diameter (volume average particle diameter) of the monomer pre-emulsion became similar to that of Example 1. An aqueous inkjet recording liquid was obtained by using the obtained polymer emulsion in a similar manner to that of Example 1, and similar evaluations were made.

[Examples 8 and 9]

A polymer emulsion was obtained by carrying out similar processes to those of Example 1 except that the volume average particle diameter of the monomer pre-emulsion as measured by a particle counting method was changed to a value shown in Table 1 by controlling the number of revolutions and the time of revolutions of the batch-type homomixer when the monomer pre-emulsion was obtained.
An aqueous inkjet recording liquid was obtained by using the obtained polymer emulsion in a similar manner to that of Example 1, and similar evaluations were made.

[Examples 10 and 11]

A polymer emulsion was obtained by carrying out similar processes to those of Example 1 except that the amount of AQUARON KH-20 put in the reaction vessel was change from 0.5 pts. to 0.6 pts.

(Example 10) and 0.4 pts. (Example 11).

An aqueous inkjet recording liquid was obtained by using the obtained polymer emulsion in a similar manner to that of Example 1, and similar evaluations were made.

[Comparative examples 1 to 4]

The monomer composition constituting the monomer pre-emulsion put in the dropping tank was changed to a composition show in Table 1.
In each of Comparative example 1 in which acrylic acid was not used, Comparative example 2 in which the amount of acrylic acid was excessively large, and Comparative example 4 in which the amount of Sila-Ace 210 (vinyl trimethoxysilane) was excessively large, the polymerization did not advance with stability. Therefore, the polymerization was stopped halfway.
In Comparative example 3 in which Sila-Ace 210 (vinyl trimethoxysilane) was not used, a polymer emulsion as well as a monomer pre-emulsion were obtained as in the case of Example 1. An aqueous inkjet recording liquid was obtained by using the obtained polymer emulsion in a similar manner to that of Example 1, and similar evaluations were made.

[Comparative example 5]

An attempt to obtain a polymer emulsion was made by carrying out similar processes to those of Example 1 except that the amount of AQUARON KH-20, which was the emulsifier constituting the monomer pre-emulsion put in the dropping tank, was changed from 1.5 pts. to 0.01 pts. However, the amount of the emulsifier required to convert the monomer into an emulsion was insufficient and a stable monomer pre-emulsion was not obtained. Therefore, it was not polymerized.

[Comparative example 6]

A polymer emulsion as well as a monomer pre-emulsion were obtained by carrying out similar processes to those of Example 1 except that the amount of AQUARON KH-20, which was the emulsifier constituting the monomer pre-emulsion put in the dropping tank, was changed from 1.5 pts. to 9.5 pts. An aqueous inkjet recording liquid was obtained by using the obtained polymer emulsion in a similar manner to that of Example 1, and similar evaluations were made.

[Comparative example 7]

A plate vane was used instead of the batch-type homomixer when a monomer pre-emulsion was obtained, and a monomer pre-emulsion having a volume average particle diameter of 30 μm as measured by a particle counting method was obtained. Then, a polymer emulsion was obtained by a similar method to that of Example 1. An aqueous inkjet recording liquid was obtained by using the obtained polymer emulsion in a similar manner to that of Example 1, and similar evaluations were made.

[Comparative examples 8 and 9]

A polymer emulsion was obtained by carrying out similar processes to those of Example 1 except that the amount of AQUARON KH-20 added in the reaction vessel was change from 0.5 pts. to 1.5 pts. (Comparative example 8) and 0.1 pts. (Comparative example 9). An aqueous inkjet recording liquid was obtained by using the obtained polymer emulsion in a similar manner to that of Example 1, and similar evaluations were made.

[Comparative example 10]

A polymer emulsion was obtained by carrying out similar processes to those of Example 1 except that 10 wt. % of the monomer pre-emulsion described in Example 1 was put in the reaction vessel containing the water and the emulsifier and the remaining 90 wt.% of the monomer pre-emulsion described in Example 1 was put in the dropping tank. An aqueous inkjet recording liquid was obtained by using the obtained polymer emulsion in a similar manner to that of Example 1, and similar evaluations were made.

1. OD value

Painted articles were made using aqueous inkjet recording liquids obtained in the above-described Examples and Comparative examples in the following manner, and optical densities (OD values) of these painted articles were measured.
Painted articles were obtained by applying each of the aqueous inkjet recording liquids was applied to PPC (Xerox4024: Xerox), a high-quality paper (New NPI high-quality paper: Nippon Paper), and a coated paper (Tokubishi Art double-sided N: MITSUBISHI PAPER MILLS Ltd.) by using K Control Coarter (MATSUO SANGYO Co., Ltd.) with K101 BAR #2 red/2μ (MATSUO SANGYO Co., Ltd.), and drying them,
The optical densities (OD values) of the above-mentioned painted articles were measured by using a reflecting densitometer "X-rite528 Spectrodensitometer (X-rite). The results are shown in Tables 1 and 2. Note that the higher the optical density (OD value) is, the better the optical characteristic is as a recording liquid.

2. Wear-resistance test

The wear-resistances of aqueous inkjet recording liquids obtained in the above-described Examples and Comparative examples were evaluated after preparing painted articles according to a similar method to the above-described method and carrying out the following process on these painted articles.
That is, the painted surfaces of the above-mentioned painted articles were scrubbed 50 times with unbleached muslin No. 3 for a test for dyeing fastness according to JIS by using AB-301 COLOR FASTNESS RUBBING TESTER (TESTER SANGYO Co., LTD.) After that, the wear-resistances of the painted articles were evaluated into four levels according to the degree of deterioration on the painted surface. The results are shown in Tables 1 and 2. The symbol ◎ indicates very excellent; ○ indicates excellent; △ indicates bad; and × indicates very bad.
[Table1]

EP 2 377 893 B1

| | | | | EXAMPLES | | | | | | | | | | |
|---|---|---|---|---|---|---|---|---|---|---|---|---|---|---|
| | | | | 1 | 2 | 3 | 4 | 5 | 6 | 7 | 8 | 9 | 10 | 11 |
| DROPPING TANK | MONOMER EMULSION | MONOMER | (a1) acrylic acid | 1.2 | 0.5 | 2.5 | 1.2 | | | | | | | |
| | | | (a2) Sila-Ace S210 | 6.0 | | | 1.0 | 10.0 | 6.0 | | | | | |
| | | | (a3) 2-ethylhexyl acrylate | 51.3 | | | | | | | | | | |
| | | | (a3) methyl methacrylate | 40.5 | 41.2 | 39.2 | 45.5 | 36.5 | 40.5 | | | | | |
| | | | acrylamide | 1.0 | | | | | | | | | | |
| | | EMULSIFIER AQUARON KH-20 | | 1.5 | | | | | 0.5 | 2.5 | 1.5 | | 1.5 | 1.5 |
| | | VOLUME AVERAGE PARTICLE DIAMETER BY PARTICLE COUNT METHOD ($\mu$m) | | 3.0 | | | | | | | 0.5 | 5.0 | 3.0 | | |
| REACTION (POLYMERIZATION) VESSEL | EMULSIFIER AQUARON KH-20 | | | 0.5 | | | | | | | | | | 0.6 | 0.4 |
| | POLYMERIZATION INITIATOR | ammonium persulfate | | 0.3 | | | | | | | | | | | |
| ANOTHER DROPPING TANK | POLYMERIZATION INITIATOR | ammonium persulfate | | 0.3 | | | | | | | | | | | |
| POLYMER EMULSION | COAGULATION AMOUNT (wt.%) | | | 0.1 | 0.3 | 0.3 | 0.1 | 0.3 | 0.3 | 0.1 | 0.1 | 0.4 | 0.2 | 0.1 |
| | D50 (VOLUME 50%) PARTICLE DIAMETER (nm) BY DYNAMIC LIGHT SCATTER METHOD | | | 130 | | | | | | | | | 100 | 150 |
| | NUMBER OF LARGE PARTICLES OF 1.5 $\mu$m OR GREATER IN SOLID CONTENT CONCENTRATION 0.1% BY PARTICLE COUNT METHOD (number/cm3) | | | $1\times10^5$ | $1\times10^5$ | $1\times10^5$ | $1\times10^5$ | $2\times10^5$ | $1\times10^5$ | $1\times10^5$ | $2\times10^5$ | $3\times10^5$ | $1\times10^5$ | $1\times10^5$ |
| RECORDING LIQUID EVALUATION RESULT | OD VALUE | PPC | | 1.13 | 1.13 | 1.13 | 1.12 | 1.13 | 1.13 | 1.13 | 1.15 | 1.13 | 1.13 | 1.13 |
| | | HIGH-QUALITY PAPER | | 1.12 | 1.12 | 1.12 | 1.11 | 1.12 | 1.12 | 1.12 | 1.14 | 1.12 | 1.13 | 1.12 |
| | | COATED PAPER | | 2.52 | 2.52 | 2.52 | 2.48 | 2.52 | 2.52 | 2.52 | 2.55 | 2.52 | 2.53 | 2.50 |
| | WEAR-RESISTANCE TEST | PPC | | ○ | ○ | ○ | ○ | ○ | ○ | ○ | ◎ | ○ | ○ | ○ |
| | | HIGH-QUALITY PAPER | | ◎ | ○ | ○ | ○ | ◎ | ○ | ○ | ◎ | ○ | ◎ | ○ |
| | | COATED PAPER | | ◎ | ○ | ○ | ○ | ○ | ○ | ○ | ◎ | ○ | ○ | ○ |

[Table2]

EP 2 377 893 B1

| | | | | | EXAMPLES | | | | | | | | | | |
|---|---|---|---|---|---|---|---|---|---|---|---|---|---|---|---|
| | | | | | 1 | 2 | 3 | 4 | 5 | 6 | 7 | 8 | 9 | 10 | 11 |
| DROPPING TANK | MONOMER EMULSION | MONOMER | (a1) | acrylic acid | 1.2 | 0.5 | 2.5 | 1.2 | | | | | | | |
| | | | (a2) | Sila-Ace S210 | 6.0 | | | 1.0 | 10.0 | 6.0 | | | | | |
| | | | (a3) | 2-ethylhexyl acrylate | 51.3 | | | | | | | | | | |
| | | | | methyl methacrylate | 40.5 | 41.2 | 39.2 | 45.5 | 36.5 | 40.5 | | | | | |
| | | | | acrylamide | 1.0 | | | | | | | | | | |
| | | EMULSIFIER | | AQUARON KH-20 | 1.5 | | | | | 0.5 | 2.5 | 1.5 | | 1.5 | 1.5 |
| | | VOLUME AVERAGE PARTICLE DIAMETER BY PARTICLE COUNT METHOD ($\mu$m) | | | 3.0 | | | | | | | 0.5 | 5.0 | 3.0 | |
| REACTION (POLYMERIZATION) VESSEL | EMULSIFIER | | | AQUARON KH-20 | 0.5 | | | | | | | | | 0.6 | 0.4 |
| | POLYMERIZATION INITIATOR | | | ammonium persulfate | 0.3 | | | | | | | | | | |
| ANOTHER DROPPING TANK | POLYMERIZATION INITIATOR | | | ammonium persulfate | 0.3 | | | | | | | | | | |
| POLYMER EMULSION | COAGULATION AMOUNT (wt.%) | | | | 0.1 | 0.3 | 0.3 | 0.1 | 0.3 | 0.3 | 0.1 | 0.1 | 0.4 | 0.2 | 0.1 |
| | D50 (VOLUME 50%) PARTICLE DIAMETER (nm) BY DYNAMIC LIGHT SCATTER METHOD | | | | 130 | | | | | | | | | 100 | 150 |
| | NUMBER OF LARGE PARTICLES OF 1.5 $\mu$m OR GREATER IN SOLID CONTENT CONCENTRATION 0.1% BY PARTICLE COUNT METHOD (number/cm3) | | | | $1 \times 10^5$ | $1 \times 10^5$ | $1 \times 10^5$ | $1 \times 10^5$ | $2 \times 10^5$ | $1 \times 10^5$ | $1 \times 10^5$ | $2 \times 10^5$ | $3 \times 10^5$ | $1 \times 10^5$ | $1 \times 10^5$ |
| RECORDING LIQUID EVALUATION RESULT | OD VALUE | | | PPC | 1.13 | 1.13 | 1.13 | 1.12 | 1.13 | 1.13 | 1.13 | 1.15 | 1.13 | 1.13 | 1.13 |
| | | | | HIGH-QUALITY PAPER | 1.12 | 1.12 | 1.12 | 1.11 | 1.12 | 1.12 | 1.12 | 1.14 | 1.12 | 1.13 | 1.12 |
| | | | | COATED PAPER | 2.52 | 2.52 | 2.52 | 2.48 | 2.52 | 2.52 | 2.52 | 2.55 | 2.52 | 2.53 | 2.50 |
| | WEAR-RESISTANCE TEST | | | PPC | ○ | ○ | ○ | ○ | ○ | ○ | ○ | ◎ | ○ | ○ | ○ |
| | | | | HIGH-QUALITY PAPER | ◎ | ○ | ○ | ○ | ◎ | ○ | ○ | ◎ | ○ | ◎ | ○ |
| | | | | COATED PAPER | ◎ | ○ | ○ | ○ | ○ | ○ | ○ | ◎ | ○ | ○ | ○ |

16

For Comparative example 1, the particle size state of the monomer pre-emulsion was appropriate. However, since no acrylic acid was used, the stability of polymer particles during the polymerization was low and the stability could not be maintained.

For Comparative example 2, the particle size state of the monomer pre-emulsion was appropriate. However, the amount of acrylic acid was so large that the polymer generated during the polymerization was excessively hydrophilic. As a result, surface entanglement between polymer particles became so strong that the stable dispersion state was not be able to be maintained.

For Comparative example 3, the particle size states of the monomer pre-emulsion and the polymer emulsion were appropriate. However, since the radically-polymerizable unsaturated monomer having (an) alkoxysilyl group(s) (a2) was not used at all, neither of the intra-polymer-particle cross-link and the inter-polymer-particle cross-link is formed. As a result, the property as a polymer emulsion was poor. The filling property of the ink was also poor, resulting in a low OD value. Further, the strength of the polymer was low, resulting in poor wear-resistance.

For Comparative example 4, the particle size state of the monomer pre-emulsion was appropriate. However, the amount of the hardly-water-soluble radically-polymerizable unsaturated monomer having (an) alkoxysilyl group(s) was excessively large. Since the ethylene unsaturated monomer having (an) alkoxysilyl group(s) is very hydrophobic, it was very difficult to supply an emulsifier micelle in the water phase, thus making the polymerization very difficult. Further, since the ethylene unsaturated monomer having (an) alkoxysilyl group(s) (a2) is a cross-link component, it is also a component that lowers the polymerization stability. Therefore, when the amount of the cross-link component like this is excessively larger, particles condense with each other during the polymerization, thus preventing the formation of a stable polymer emulsion.

For Comparative example 5, the amount of the emulsifier for the monomer pre-emulsion was so small that the monomer pre-emulsion itself was not be able to be obtained.

For Comparative example 6, the particle size states of the monomer pre-emulsion and the polymer emulsion were appropriate. However, the amount of the emulsifier for the monomer pre-emulsion was so large that an adverse effect was exerted on the ink property. Therefore, the OD value as an aqueous inkjet recording liquid and the printing property in terms of wear-resistance were poor.

For Comparative example 7, since the volume average particle diameter of the monomer pre-emulsion used in the polymerization as measured by a particle counting method was 30 $\mu$m and thus large, the radically-polymerizable unsaturated monomer having (an) alkoxysilyl group(s) (a2) was less likely to be dissolved from the monomer droplet to the water. As a result, the radically-polymerizable unsaturated monomer (a2) could not be reliably used in the formation of polymer particles, was left unused, and formed ultra-large particles and coagulations of 1.5 $\mu$m or greater as measured by a particle counting method. That is, most of the radically-polymerizable unsaturated monomer having (an) alkoxysilyl group(s) (a2) was consumed in the formation of ultra-large particles and coagulations. Therefore, only very small part of the used radically-polymerizable unsaturated monomer having (an) alkoxysilyl group(s) (a2) was consumed for the formation of the polymer emulsion. Similarly to Comparative example 3, only printed matter having poor wear-resistance can be obtained from an inkjet recoding liquid using a polymer emulsion containing a small amount of the radically-polymerizable unsaturated monomer (a2). Further, the ink filling property of an inkjet recording liquid using a polymer emulsion in which a large number of large particles are present is poor, thus resulting in a low OD value. Further, an inkjet recording liquid using a polymer emulsion in which a large number of large particles are present has non-uniform properties as a recording liquid because of the large number of the large particles, thus resulting in poor wear-resistance.

For Comparative example 8, D50 particle diameter of the polymer emulsion as measured by a dynamic light scattering method was 50 nm and thus excessively small. An inkjet recording liquid using the polymer emulsion like this has a very large viscosity. Therefore, only printed matter having a poor stability as an inkjet recording liquid, a low OD value, and poor wear-resistance can be obtained.

For Comparative example 9, D50 particle diameter of the polymer emulsion as measured by a dynamic light scattering method was 200 nm and thus excessively large in comparison to the carbon black aqueous dispersion body having an average particle diameter of about 100 nm. As a result, the polymer cannot be absorbed to the carbon black, and thereby cannot contribute to the dispersion stability of the carbon black. Therefore, it also cannot contribute to the fixing property to the recoding paper. Therefore, only printed matter having a low OD value and poor wear-resistance can be obtained from an inkjet recoding liquid using the polymer emulsion like this.

For Comparative example 10, the same monomer pre-emulsion as that of Example 1 was used. However, in Comparative example 10, 10 pts. of the monomer pre-emulsion was put in the reaction vessel before adding the 5% APS aqueous solution in the reaction vessel, and the remaining monomer pre-emulsion was dropped into the reaction vessel 10 minutes after the addition of the 5% APS aqueous solution.

In this case, the volume average particle diameter of the monomer pre-emulsion was small, and it is possible to dissolve the hardly-water-soluble monomer (a2) from the monomer droplet into the water without delay. Therefore, it is believed that the formation of the large particles and coagulations was suppressed in comparison to the case where the volume average particle diameter of the monomer pre-emulsion is large. However, the monomer pre-emulsion, which causes the formation of ultra-large particles, is already present in the reaction vessel before initiating the polymerization. The monomer pre-emulsion, which is put in the reaction vessel, is not completely consumed in a period as little as 10 minutes, i.e., a period from when the APS aqueous solution is added as an initiator to when the monomer pre-emulsion is dropped. That is, a monomer pre-emulsion is newly added from the dropping tank to the reaction vessel in which the hardly-water-soluble monomer (a2) still remains, resulting in the generation of a polymer emulsion containing large particles and coagulations. The ink filling property of an inkjet recording liquid using a polymer emulsion containing a large number of large particles is poor, thus resulting in a low OD value. Further, an inkjet recording liquid using a polymer emulsion in which a large number of large particles are present has non-uniform properties as a recording liquid because of the large number of the large particles, thus resulting in poor wear-resistance.

This application is based upon and claims the benefit of priority from Japanese patent application No. 2009-003026, filed on January 9, 2009, the disclosure of which is incorporated herein in its entirety by reference.

## Claims

1. An aqueous inkjet recording liquid containing a polymer emulsion and a pigment, wherein
   the polymer emulsion is obtained by radically polymerizing a radically-polymerizable unsaturated monomer (a) containing, based on 100 wt.% of the radically-polymerizable unsaturated monomer (a):

   0.1 to 5 wt.% of a radically-polymerizable unsaturated monomer having a carboxyl group (a1),
   0.1 to 20 wt.% of a radically-polymerizable unsaturated monomer having an alkoxysilyl group (a2), and

   another radically-polymerizable unsaturated monomer (a3) that can be copolymerized with the monomers (a1) and (a2),
   by using an emulsifier in an amount of greater than 0. 1 wt.pts. and no greater than 5 wt.pts. based on 100 wt.pts. of the radically-polymerizable unsaturated monomer (a), water, and an aqueous polymerization initiator selected from persulfates and tertiary butyl hydroperoxide,
   D50 particle diameter of the polymer as measured by a dynamic light scattering method is not less than 100 nm and not greater than 150 nm, and
   a number of ultra-large particles of 1.5 $\mu$m or greater in the polymer emulsion when converted to a solid content concentration 0.1% is 5.0 x $10^5$/cm$^3$ or fewer as measured by a particle counting method.

2. The aqueous inkjet recording liquid according to Claim 1, wherein no large particle having a particle diameter of 0.5 $\mu$m or greater is observed by the dynamic light scattering method.

3. The aqueous inkjet recording liquid according to Claim 1 or 2, wherein an amount of the polymer is not less than 0.1 wt.% and not  greater than 20 wt.% based on a total weight of the aqueous inkjet recording liquid.

4. The aqueous inkjet recording liquid according to any one of Claims 1 to 3, wherein an amount of the pigment is not less than 0.5 wt.% and not greater than 10 wt.% based on a total weight of the aqueous inkjet recording liquid.

5. The aqueous inkjet recording liquid according to any one of Claims 1 to 4, wherein an average primary particle diameter of the pigment in the aqueous inkjet recording liquid is not less than 5 nm and not greater than 1000 nm.

## Patentansprüche

1. Wässrige Tintenstrahl-Aufzeichungsflüssigkeit, die eine Polymer-Emulsion und einen Farbstoff enthält, wobei die Polymeremulsion erhalten wird durch radikalisches Polymerisieren eines radikalisch polymerisierbaren ungesättigten Monomers (a), welches, bezogen auf 100 Gew.-% des radikalisch polymerisierbaren ungesättigten Monomers (a), enthält:

   0.1 bis 5 Gew.-% eines radikalisch polymerisierbaren ungesättigten Monomers, welches eine Carboxyl-Gruppe (a1) aufweist,
   0.1 bis 20 Gew.-% eines radikalisch polymerisierbaren ungesättigten Monomers, welches eine Alkoxysilyl-Gruppe (a2) aufweist, und

   ein weiteres radikalisch polymerisierbares ungesättigtes Monomer (a3), welches mit den Monomeren (a1) und (a2) co-polymerisiert werden kann,
durch die Verwendung eines Emulgators in einer Menge größer als 0.1 Gew.-Pkt. und nicht größer als 5 Gew.-Pkt. bezogen auf 100 Gew.-Pkt. des radikalisch polymerisierbaren ungesättigten Monomers (a), Wasser, und einen wässrigen Polymerisierungs-Initiator, der aus Persulfaten und tertiärem Butyl-Hydroperoxid ausgewählt wurde, der D50 Teilchendurchmesser des Polymers, gemessen mittels eines dynamischen Lichtstreuungsverfahrens, nicht kleiner als 100nm und nicht größer als 150nm ist, eine Anzahl von extrem großen Teilchen mit 1.5$\mu$m oder größer in der Polymer-Emulsion, gemessen mittels eines Teilchenzählverfahrens, $5.0\times10^5$/cm$^3$ oder geringer ist, wenn diese in eine Feststoffgehalt-Konzentration von 0.1 % umgewandelt wird.

2.  Wässrige Tintenstrahl-Aufzeichungsflüssigkeit nach Anspruch 1, wobei kein großes Teilchen mit einem Teilchendurchmesser von 0.5$\mu$m oder größer beobachtet wird mittels des dynamischen Lichtstreuungsverfahrens.

3.  Wässrige Tintenstrahl-Aufzeichnungsflüssigkeit nach Anspruch 1 oder 2, wobei eine Menge des Polymers nicht kleiner als 0.1 Gew.-% und nicht größer als 20 Gew.-% ist, bezogen auf das Gesamtgewicht der wässrigen Tintenstrahl-Aufzeichnungsflüssigkeit.

4.  Wässrige Tintenstrahl-Aufzeichnungsflüssigkeit nach einem der Ansprüche 1 bis 3, wobei eine Menge des Farbstoffs nicht kleiner als 0.5 Gew.-% und nicht größer als 10 Gew.-% ist, bezogen auf das Gesamtgewicht der wässrigen Tintenstrahl-Aufzeichnungsflüssigkeit.

5.  Wässrige Tintenstrahl-Aufzeichnungsflüssigkeit nach einem der Ansprüche 1 bis 4, wobei ein durchschnittlicher Primärteilchendurchmesser des Farbstoffes in der wässrigen Tintenstrahl-Aufzeichnungsflüssigkeit nicht kleiner als 5nm und nicht größer als 1000nm ist.

**Revendications**

1.  Liquide aqueux pour enregistrement par jet d'encre contenant une émulsion de polymère et un pigment, dans lequel l'émulsion de polymère est obtenue par polymérisation radicalaire d'un monomère insaturé radicalement polymérisable (a) contenant, pour 100 % en poids du monomère insaturé radicalement polymérisable (a) :

    0,1 à 5 % en poids d'un monomère insaturé radicalement polymérisable ayant un groupe carboxyle (a1),
    0,1 à 20 % en poids d'un monomère insaturé radicalement polymérisable ayant un groupe alcoxysilyle (a2), et

    un autre monomère insaturé radicalement polymérisable (a3) qui peut être copolymérisé avec les monomères (a1) et (a2),
    en utilisant un émulsifiant dans une quantité de plus de 0,1% en poids, et pas plus de 5 % en poids pour 100 % en poids du monomère insaturé radicalement polymérisable (a), de l'eau et un initiateur de polymérisation aqueux choisi parmi les persulfates et l'hydroperoxyde de butyle tertiaire, le diamètre de particule D50 du polymère tel que mesuré par une méthode de diffusion dynamique de la lumière est non inférieur à 100 nm et non supérieur à 150 nm, et un nombre de particules ultra grandes de 1,5 $\mu$m ou plus dans l'émulsion de polymère lorsque converti en une concentration de teneur en solide de 0,1% est de 5,0 x 10$^5$/cm$^3$ ou moins tel que mesuré par une méthode de comptage de particule.

2.  Liquide aqueux pour enregistrement par jet d'encre selon la revendication 1, dans lequel aucune grande particule ayant un diamètre de particule de 0,5 $\mu$m ou plus n'est observée par la méthode de diffusion dynamique de la lumière.

3.  Liquide aqueux pour enregistrement par jet d'encre selon la revendication 1 ou 2, dans lequel une quantité du polymère est de pas moins de 0,1% en poids et pas plus de 20 % en poids par rapport au poids total du liquide aqueux pour enregistrement par jet d'encre.

4.  Liquide aqueux pour enregistrement par jet d'encre selon l'une quelconque des revendications 1 à 3, dans lequel une quantité de pigment est de pas moins de 0,5 % en poids et pas plus de 10% en poids par rapport au poids total du liquide aqueux pour enregistrement par et d'encre.

5.  Liquide aqueux pour enregistrement par jet d'encre selon l'une quelconque des revendications 1 à 4, dans lequel un diamètre moyen de particule primaire du pigment dans le liquide aqueux pour enregistrement par jet d'encre est de pas moins de 5 nm et pas plus de 1 000 nm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9235499 A
- JP 2006282986 A
- JP 2002294105 A
- JP 2009003026 A